# EUROPEAN PATENT APPLICATION

(11) **EP 2 101 231 A1**
(43) Date of publication of application: **16.09.2009**
(21) Application number: 08425595.9
(22) Date of filing: 09.09.2008
(51) Int. Cl.: G05B 19/042

(54) **Modular wireless actuator**

(71) Applicant: Cannata, Antonio Americo, 20094 Corsico (MI) (IT)
(72) Inventor: Cannata, Antonio Americo, 20094 Corsico (MI) (IT)
(74) Representative: Riccardi, Sergio

(57) **Abstract**

Actuator provided with a wireless communication system to receive command signals and send state signals to an information system device in communication with said actuator by a computer network.

## Description

The present invention relates to a wireless actuator, particularly to a modular wireless actuator.

The actuator in accordance with the present invention is preferably adapted to be used in civil buildings in which a remote management of a plurality of electric, hydraulic or thermal users and the like is desired. Said users, therefore, will have the adjustment of their flow and/or state variables depending on a command set by an actuator of the present invention. For example, in case of an electric lighting consumption, the actuator will be able to command the lighting state as well as, if a particular lighting device provides it, to adjust intensity thereof. Still, in case of thermal consumption, said actuator could command the switching on and off of a heating system, remove some sectionings, possibly provided in the same system, from the heating carrier flow. In every case the actuator will be, however, able to act on a set of relays for piloting the particular consumption it is operatively connected to.

The feature of the actuator in accordance with the present invention is receiving the command signals, needed to manage the interlocked consumption, through a computer network provided with at least one access point, or, as known by those skilled in the art, with at least a device able to send and receive radio signals in order to establish a communication between said computer network and an information system device, such as a personal computer, a laptop computer, palm computer and any other device able to establish connections through wireless networks. Generally the communication between said wireless devices, said computer network and the wireless actuator of the present invention will be established based on known network protocols, and therefore not described herein. The network protocols currently adopted by the actuator of the present invention are provided by IEEE 802.11 standard, but there could be embodiments of said actuator even according to possible coming modifications of said standard.

In terms of structure the wireless actuator of the present invention is, according to other provided embodiments, configurable as an embedding module that as such may be placed directly in supporting plates provided within the interior wiring of the building, wherein said actuators are used. In addition and depending on particular applications needed, said actuator may fit more than one slot in said module supporting plate. Such installing solution also solves the energy supply problem of the actuator in accordance with the present invention, since it will be powered at the network voltage just present in the wiring, and therefore it will not need a separate power supply.

A detailed description of the wireless modular actuator in accordance with preferred embodiments of the present invention will now be provided with reference to the annexed drawings, in which:
Fig. 1 shows a block diagram of the wireless actuator according to the present invention,
Fig. 2 shows a generic installation of the actuator in fig. 1 within a building provided with the necessary computer network,
Fig. 3 shows a supporting plate for modules and a protective cover for said modules, and
Fig. 4 shows a generic installation of the actuator in fig. 1 within a building provided with the necessary computer network and the plates of fig. 3.

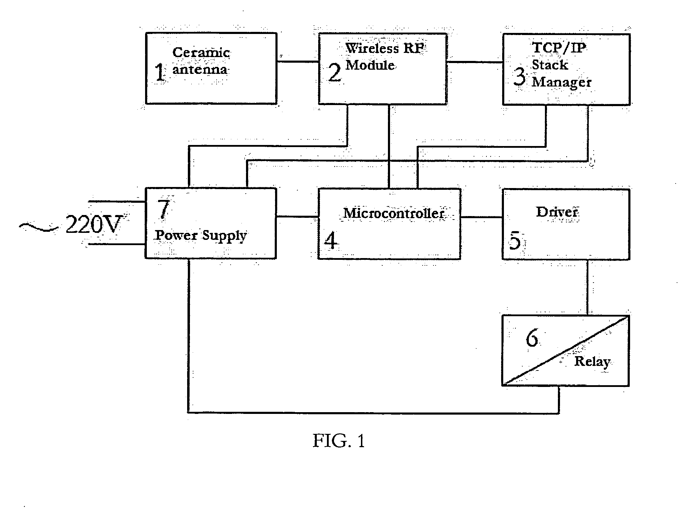

Referring now to fig. 1, the actuator 10 comprises:
- an antenna 1,
- a wireless radiofrequency (RF) module 2,
- a stack manager 3,
- a microcontroller 4,
- a driver 5,
- a relay 6,
- a power supply unit 7.

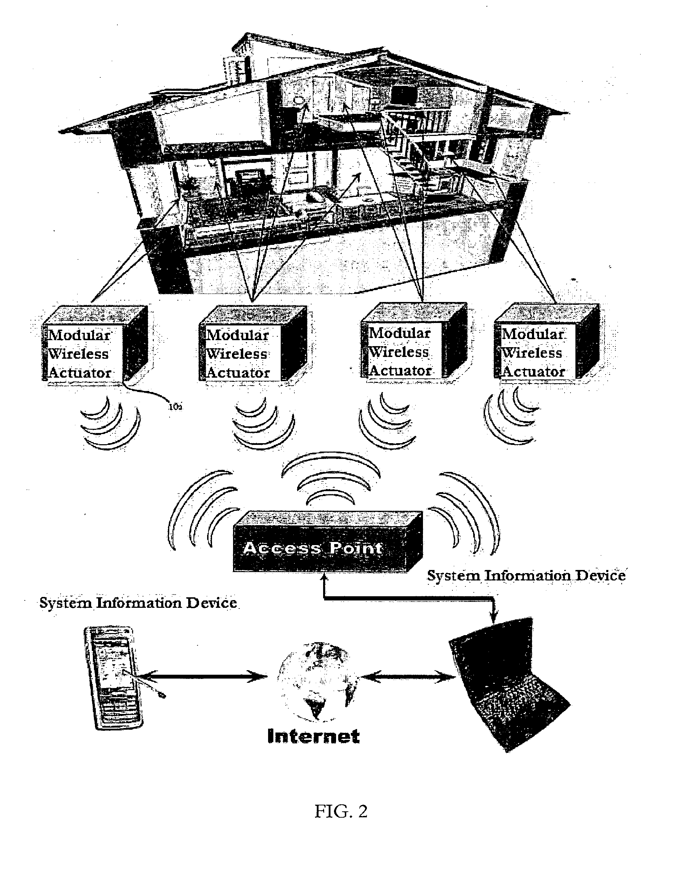

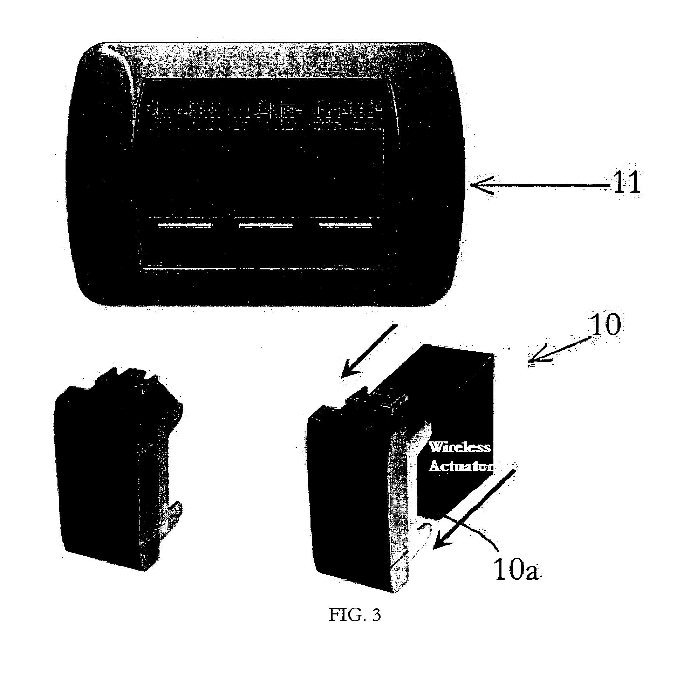

The antenna 1 is monolithic ceramic of small size and placed near the front wall 10a (fig. 2 and 3) of said wireless actuator 10 so as to irradiate mainly outside. The wireless RF module 2 receives signals coming from an access point 12 and transmits what is required by the chosen wireless protocol. The stack manager 3, that is in the shown embodiment a TCP/IP stack, serves as pilot of said wireless RF module 2 and for transporting signals from and towards said microcontroller 4 by the network communication protocol. At this time, said microcontroller 4 considers as commands the signals coming from outside through said access point 12 and sends them, according to the due procedure, to said relay 6 for the command actuation. Said microcontroller 4, after the command forwarding to the relay 6, is able to generate control, diagnostic and/or surveillance signals for different elements connected to the actuation circuit (not shown). If it is not embedded with the microcontroller 4, the block diagram in fig. 2 will further provide a driver 6 the function of which is simply to fit the current levels from the microcontroller 4 so as to pilot handy said relay 6. Finally the power supply unit 7, by taking directly from the 220 V a.c. electric system little power necessary for operation of the all electric and electronic circuits, delivers it at the suitable voltage levels to each part of said circuits.

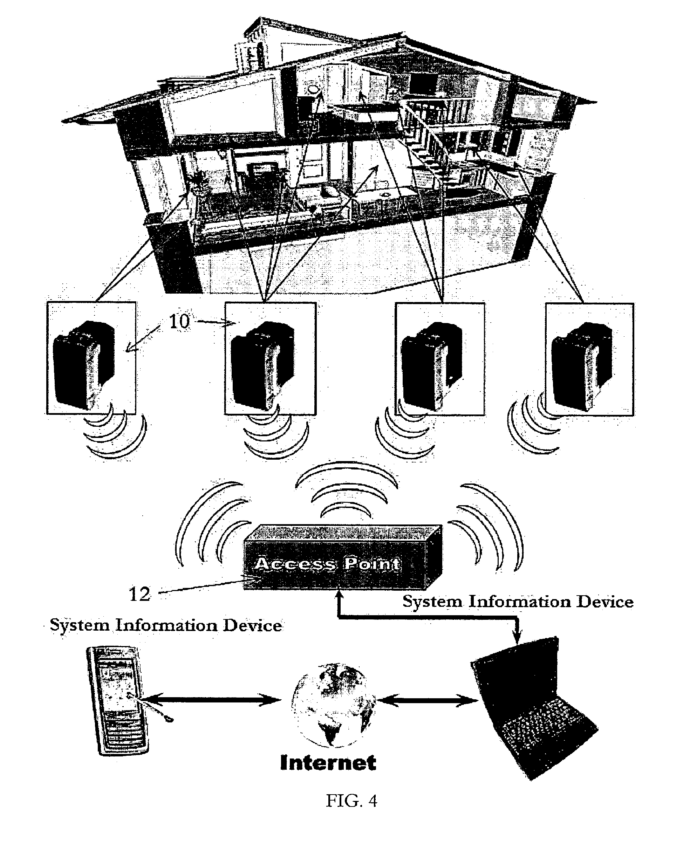

Referring now to fig. 4, a building is provided with a plurality of supporting plates 11 for insertion of one or more modules of the wireless actuator 10 arranged near the users to be commanded through the computer network. Therefore by an information system device directly connected to the local area network, and thus to said access point, or by a information system device connected to said local area network through internet but in any case provided with suitable software, it is possible to command the operation of each if said wireless actuators 10 in order to manage the particular user connected thereto according to the specific needs.

## Claims

1. A modular actuator (10):
(i) at least one antenna (1),
(ii) at least one wireless RF module (2), in communication with an access point by said antenna (1),
(iii) at least one stack manager (3) for managing signals from and towards said wireless RF module (2),
(iv) at least one microcontroller (4),
(v) at least one driver (5),
(vi) at least one relay (6), and
(vii) at least one power supply unit (7) directly connectable to electric system, said at least one microcontroller (4) serving to generate, depending on the signals of said at least one wireless RF module (2), commands, suitably amplified by said at least one driver (5), for piloting said at least one relay (6) operatively connected to a device acting on flow and state variables of a generic civil or industrial user.

2. The modular actuator (10) according to claim 1, configured for housing in one or more slots of a supporting plate (11) of an electric system powered by the network voltage.

3. The modular actuator (10) according to claim 1, in which said at least one stack manager (3) operates on the basis of the TCP/IP communication protocol.

4. The modular actuator (10) according to claim 1, in which said at least one stack manager (3) operates on the basis of the IEEE 802.11 communication protocol.

5. The modular actuator (10) according to claim 1, in which said at least one stack manager (3) operates on the basis of the IEEE 802.15.1 communication protocol.
